# EUROPEAN PATENT APPLICATION

(11) **EP 4 583 301 A1**
(43) Date of publication of application: **09.07.2025**
(21) Application number: 23884503.6
(22) Date of filing: 21.09.2023
(51) Int. Cl.: H01M 50/533, H01M 50/536, H01M 4/13, H01M 10/04, H01M 50/103

(54) **BATTERY AND ELECTRIC DEVICE**

(30) Priority: 04.11.2022 CN 202211379482
(71) Applicant: Ningde Amperex Technology Limited, Ningde, Fujian 352100 (CN)
(72) Inventor: CHEN, Meifeng, Ningde, Fujian 352100 (CN)
(74) Representative: Icosa
(86) International application number: PCT/CN2023/120464
(87) International publication number: WO 2024/093571

(57) **Abstract**

This application discloses a battery and an electrical device. The battery includes an electrode plate and tab. The electrode plate includes a current collector and an active material layer disposed on the current collector. The tab is connected to the current collector. The tab protrudes beyond the electrode plate along a width direction of the electrode plate. Along the width direction of the electrode plate, the tab includes a first region and a second region. The first region is located between the second region and the active material layer, a thickness of the first region is t₁, and a thickness of the second region is t₂, satisfying: 0.5% ≤ (t₁ - t₂)/t₁ ≤ 5%.

## Description

### TECHNICAL FIELD

This application relates to the technical field of energy storage, and in particular, to a battery and an electrical device.

### BACKGROUND

Currently, a production process of electrode plates of a battery usually includes a coating process and a cold pressing process. Through cold pressing, the electrode plates are compacted. The cold pressing is very important for improving the energy density and electrical performance of the battery. In a cold pressing process, the elongation degree differs between an active material layer region and a blank foil region in which tabs are formed. Therefore, in order to reduce the risk of deformation or warping of the tabs, the blank foil region usually needs to be stretched and elongated after the electrode plate is cold pressed. However, the stretching and elongation operations are very likely to lead to breakage of the electrode plate, thereby impairing the yield rate of the cold pressing process. To reduce the risk of breakage of the electrode plate, a conventional measure in the prior art is to use a thicker current collector or to reduce the compaction density of the electrode plate. This measure not only brings a poor effect on alleviation of the electrode plate breakage, but also results in a loss of energy density.

### SUMMARY

In view of the above situation, there is a need to provide a battery to reduce the risk of breakage of an electrode plate and increase energy density of the battery.

Some embodiments of this application provide a battery. The battery includes an electrode plate and a tab. The electrode plate includes a current collector and an active material layer disposed on the current collector. The tab is connected to the current collector. The tab protrudes beyond the electrode plate along a width direction of the electrode plate. Along the width direction of the electrode plate, the tab includes a first region and a second region. The first region is located between the second region and the active material layer, a thickness of the first region is t₁, and a thickness of the second region is t₂, satisfying: 0.5% ≤ (t₁ - t₂)/t₁ ≤ 5%.

In the battery, the tab is divided into a first region and a second region along the width direction of the electrode plate. The first region is located between the second region and the active material layer. The second region is pre-elongated by calendering before being cold pressed. The thickness t₁ of the first region and the thickness t₂ of the second region satisfy: 0.5% ≤ (t₁ - t₂)/t₁ ≤ 5%. The difference between the thickness of the first region and the thickness of the second region needs to be prevented from being unduly large. If the difference is unduly large, the electrode plate is prone to break due to stress concentration at the junction. If the difference is unduly small, for example, less than 0.5%, a desired elongation effect of the second region fails to be achieved, and the tab is prone to warps and folds. Therefore, the thickness t₁ of the first region and the thickness t₂ of the second region are set to satisfy: 0.5% ≤ (t₁ - t₂)/t₁ ≤ 5%, thereby reducing the phenomena of breakage of the electrode plate after cold pressing, and improving the processing yield rate. In this way, a thinner current collector and/or a higher compaction density can be employed, and the energy density of the battery can be improved.

In some embodiments of this application, the thicknesses satisfy 0.5% ≤ (t₁ - t₂)/t₁ ≤ 3%, thereby further reducing the phenomena of breakage of the electrode plate after cold pressing.

In some embodiments of this application, the thicknesses satisfy 0.5% ≤ (t₁ - t₂)/t₁ ≤ 1.5%, thereby further reducing the phenomena of breakage of the electrode plate after cold pressing.

In some embodiments of this application, because the electrode plate is subjected to a cold pressing process during preparation, the current collector region covered by the active material layer is of relatively high ductility after being cold pressed. The second region is of relatively high ductility after being pre-calendered. Because the first region abuts the active material layer, the process limitations make it impracticable to calender the first region, and the ductility of the first region is relatively low. In a process of winding the electrode plate, the first region is located between the active material layer and the second region, and the electrode plate is prone to be raised in the second region, and is thereby warped or bent. Therefore, generally, it is preferable to minimize the area of the first region and maximize the area of the second region. Therefore, along a thickness direction of the tab, an area of a projection of the tab is S₁ and an area of a projection of the second region is S₂, satisfying: 60% ≤ S₂/S₁ ≤ 95%. This setting reduces the warps or folds of the tab, improves the yield rate of the wound batteries as well as flatness and energy density of batteries.

In some embodiments of this application, the area of the projection satisfies 80% ≤ S₂/S₁ ≤ 95%, thereby further reducing the defects such as warps and folds of the cold pressed tab and improving the yield rate of the wound electrode plates as well as the flatness and energy density of batteries.

In some embodiments of this application, the tab further includes a third region. The third region is located between the first region and the active material layer and connects the first region and the active material layer. A first insulation layer is disposed on the third region. The first insulation layer is located between the first region and the active material layer. The first insulation layer can serve an insulation function when the electrode plate is wound or stacked to form an electrode assembly, and reduce the risk of short circuits between the tab and another tab/electrode plate of an opposite polarity due to burrs piercing the separator.

In some embodiments of this application, a first boundary line exists at a junction between the first region and the second region. A minimum distance between the first boundary line and the first insulation layer is d₁, satisfying: 0.1 mm ≤ d₁ ≤ 1 mm. In this way, the first region possesses a specified width along the width direction of the electrode plate. The first region may be used as a transition region between the pre-calendered second region and the active material layer, so as to improve structural strength of a junction region between the first tab and the active material layer, reduce the risk of bending or fracture of the first tab along the junction between the first tab and the active material layer, and improve the shock resistance performance of the battery.

In some embodiments of this application, the first insulation layer satisfies at least one of the following conditions: a. a thickness of the first insulation layer is less than a thickness of the active material layer; b. along the width direction of the electrode plate, a length of the tab is W₁, and a length of the first insulation layer is W₂, satisfying: W₂/W₁ ≤ 0.5, and W₂ ≥ 1 mm; and, c. the first insulation layer includes an inorganic compound, and the inorganic compound is made of a material that includes at least one of aluminum oxide, magnesium oxide, or titanium oxide.

In some embodiments of this application, there are a plurality of tabs.

In some embodiments of this application, the tab is a positive tab.

An embodiment of this application further provides an electrical device, including the battery according to any one of the embodiments described above.

In the electrical device, the tab of the battery is set to contain a first region and a second region, and the second region is calendered and pre-elongated, thereby reducing the phenomenon of breakage of the cold pressed electrode plate. This design enables a thinner current collector and/or a higher compaction density, and increases the energy density of the battery.

### BRIEF DESCRIPTION OF DRAWINGS

FIG. 1 is a three-dimensional schematic structural diagram of a battery according to an embodiment of this application;
FIG. 2 is a schematic diagram of status of a battery to be packaged according to an embodiment of this application;
FIG. 3 is a cross-sectional view of an electrode assembly in FIG. 2 sectioned along a III-III line;
FIG. 4 is a schematic structural diagram of a first tab connected to a first electrode plate according to an embodiment of this application;
FIG. 5 is a cross-sectional view of FIG. 4 sectioned along a V-V line;
FIG. 6 is a schematic structural diagram of a structure shown in FIG. 4 according to an extended embodiment;
FIG. 7 is a cross-sectional view of FIG. 6 sectioned along a VII-VII line;
FIG. 8 is a schematic structural diagram of a structure shown in FIG. 4 according to an extended embodiment;
FIG. 9 is a cross-sectional view of FIG. 8 sectioned along an IX-IX line;
FIG. 10 is a schematic structural diagram of a structure shown in FIG. 4 according to an extended embodiment;
FIG. 11 is a cross-sectional view of FIG. 10 sectioned along an XI-XI line;
FIG. 12 is a schematic structural diagram of a structure shown in FIG. 4 according to an extended embodiment;
FIG. 13 is a schematic structural diagram of a second tab connected to a second electrode plate according to an embodiment of this application;
FIG. 14 is a cross-sectional view of FIG. 13 sectioned along an XIV-XIV line; and
FIG. 15 is a schematic structural diagram of an electrical device according to an embodiment of this application.

List of reference numerals:
battery 100
housing 10
first part 11
second part 12
body portion 13
seal edge portion 14
top seal edge 141
side seal edge 142
electrode assembly20
first electrode plate21
first current collector 211
first active material layer 212
fourth region 213
second electrode plate 22
second current collector 221
second active material layer222
separator 23
first tab 30
first region 31
second region 32
third region 33
first boundary line 34
second tab40
first insulation layer 50
second insulation layer 60
electrical device 200
first direction Z
second direction X
third direction Y

This application is further described below with reference to the following specific embodiments and the foregoing drawings.

### DETAILED DESCRIPTION OF EMBODIMENTS

The following describes the technical solutions in the embodiments of this application with reference to the drawings hereto. Evidently, the described embodiments are merely a part of but not all of the embodiments of this application.

It is hereby noted that a component considered to be "connected to" another component may be directly connected to the other component or may be connected to the other component through an intermediate component. A component considered to be "disposed on" another component may be directly disposed on the other component or may be disposed on the other component through an intermediate component.

Unless otherwise defined, all technical and scientific terms used herein bear the same meanings as what is normally understood by a person skilled in the technical field of this application. The terms used in the specification of this application are merely intended to describe specific embodiments but not to limit this application.

Currently, a production process of electrode plates of a battery usually includes a coating process and a cold pressing process. Through cold pressing, the electrode plates are compacted. The cold pressing is very important for improving the energy density and electrical performance of the battery. In a cold pressing process, the elongation degree differs between an active material layer region and a blank foil region in which tabs are formed. Therefore, in order to reduce the risk of deformation or warping of the tabs, the blank foil region usually needs to be stretched and elongated after the electrode plate is cold pressed. However, the stretching and elongation operations are very likely to lead to breakage of the electrode plate, thereby impairing the yield rate of the cold pressing process. To reduce the risk of breakage of the electrode plate, a conventional measure in the prior art is to use a thicker current collector or to reduce the compaction density of the electrode plate. This measure not only brings a poor effect on alleviation of the electrode plate breakage, but also results in a loss of energy density.

Some embodiments of this application provide a battery. The battery includes an electrode plate and a tab. The electrode plate includes a current collector and an active material layer disposed on the current collector. The tab is connected to the current collector. The tab protrudes beyond the electrode plate along a width direction of the electrode plate. Along the width direction of the electrode plate, the tab includes a first region and a second region. The first region is located between the second region and the active material layer, a thickness of the first region is t₁, and a thickness of the second region is t₂, satisfying: 0.5% ≤ (t₁ - t₂)/t₁ ≤ 5%.

In the battery, the tab is divided into a first region and a second region along the width direction of the electrode plate. The first region is located between the second region and the active material layer. The second region is pre-elongated by calendering. The thickness t₁ of the first region and the thickness t₂ of the second region satisfy: 0.5% ≤ (t₁ - t₂)/t₁ ≤ 5%. The difference between the thickness of the first region and the thickness of the second region needs to be prevented from being unduly large. If the difference is unduly large, the electrode plate is prone to break due to stress concentration at the junction. If the difference is unduly small, for example, less than 0.5%, a desired elongation effect of the second region fails to be achieved, and the tab is prone to warps and folds. Therefore, the thickness t₁ of the first region and the thickness t₂ of the second region satisfy: 0.5% ≤ (t₁ - t₂)/t₁ ≤ 5%, so as to reduce the phenomena of breakage of the electrode plate after cold pressing. The difference between the thickness of the first region and the thickness of the second region needs to be prevented from being unduly large. If the difference is unduly large, the electrode plate is prone to break due to stress concentration at the junction. If the difference is unduly small, a desired elongation effect of the second region fails to be achieved, and the tab is prone to warps and folds.

The following further describes the embodiments of this application with reference to drawings.

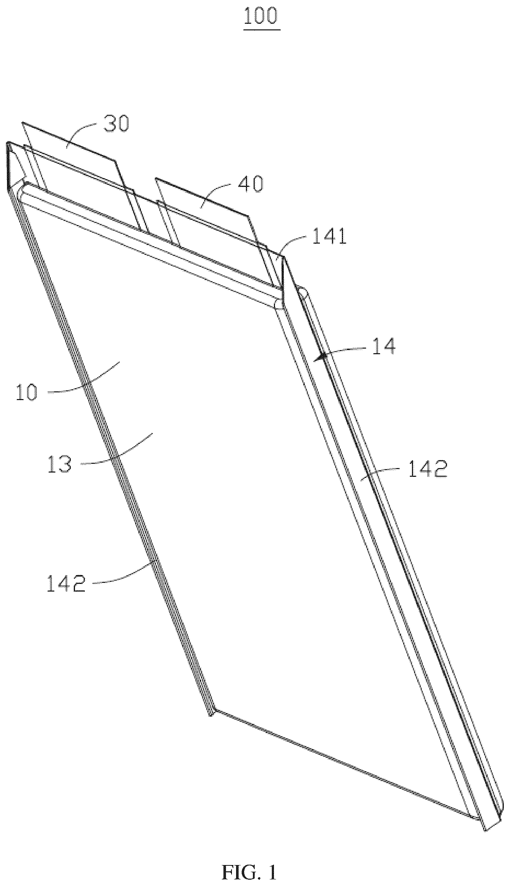

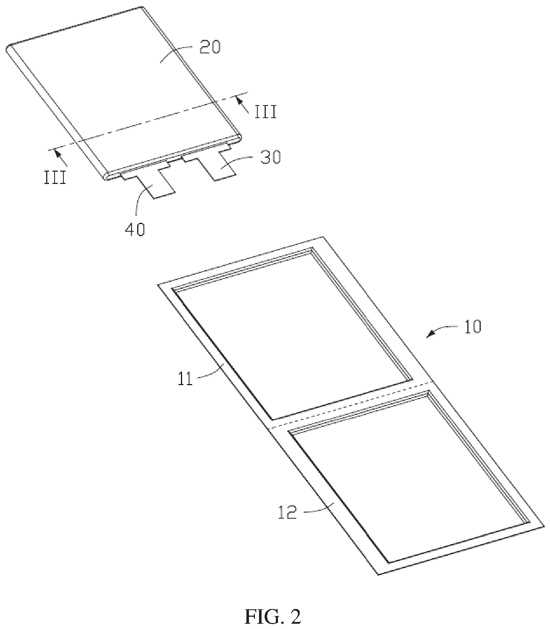

As shown in FIG. 1, FIG. 2, and FIG. 3, an embodiment of this application provides a battery 100, including a housing 10, an electrode assembly 20, a first tab 30, and a second tab 40. The electrode assembly 20 is accommodated in the housing 10. The first tab 30 and the second tab 40 are both connected to the electrode assembly 20, and protrude out of the housing 10.

In an embodiment, the housing 10 includes a first part 11 and a second part 12 connected to each other. after being connected toward each other, the first part 11 and the second part 12 can form an internal space capable of accommodating the electrode assembly 20.

In an embodiment, the housing 10 includes a body portion 13 and a seal edge portion 14. The seal edge portion 14 is connected to the body portion 13 and extends from the body portion 13. The electrode assembly 20 is disposed inside the body portion 13. The first tab 30 and the second tab 40 protrude from the seal edge portion 14. In an embodiment, the seal edge portion 14 includes a top seal edge 141 and a side seal edge 142 connected to each other. The first tab 30 and the second tab 40 protrude from the top seal edge 141.

In an embodiment, the first tab 30 and the second tab 40 are located on the same side of the body portion 13. In other embodiments, the first tab 30 and the second tab 40 may be located at two opposite ends of the body portion 13 respectively (not shown in the drawing).

The electrode assembly 20 includes a first electrode plate 21, a second electrode plate 22, and a separator 23. The separator 23 is disposed between the first electrode plate 21 and the second electrode plate 22. The first electrode plate 21, the separator 23, and the second electrode plate 22 are wound together to form an electrode assembly 20. The first tab 30 is connected to the first electrode plate 21, and the second tab 40 is connected to the second electrode plate 22. In some other embodiments, the first electrode plate 21, the separator 23, and the second electrode plate 22 are stacked together to form an electrode assembly 20 (not shown in the drawing).

One of the first tab 30 or the second tab 40 is a positive tab, and the other of the first tab 30 or the second tab 40 is a negative tab. In an embodiment, the first tab 30 is a positive tab and the second tab 40 is a negative tab, and the first electrode plate 21 is a positive electrode plate and the second electrode plate 22 is a negative electrode plate. In an embodiment, the first tab 30 is made of a material including aluminum. In an embodiment, the second tab 40 is made of a material including any one of copper, nickel, or nickel alloy.

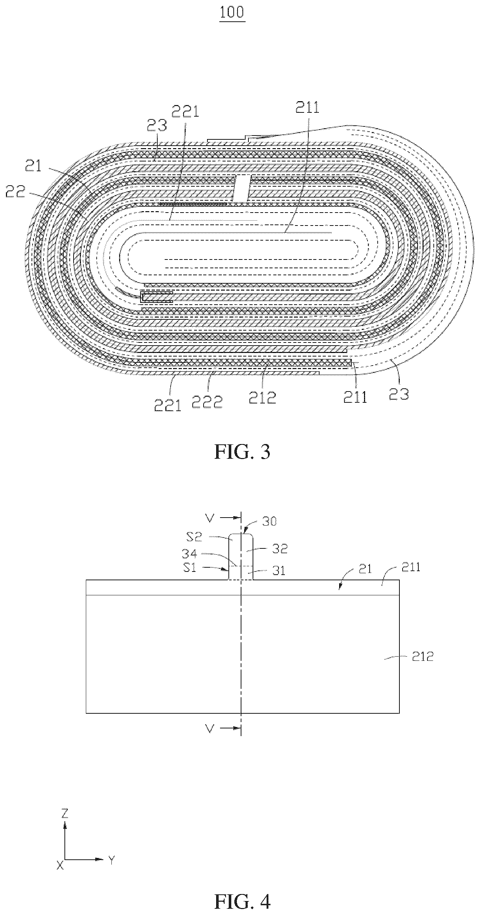

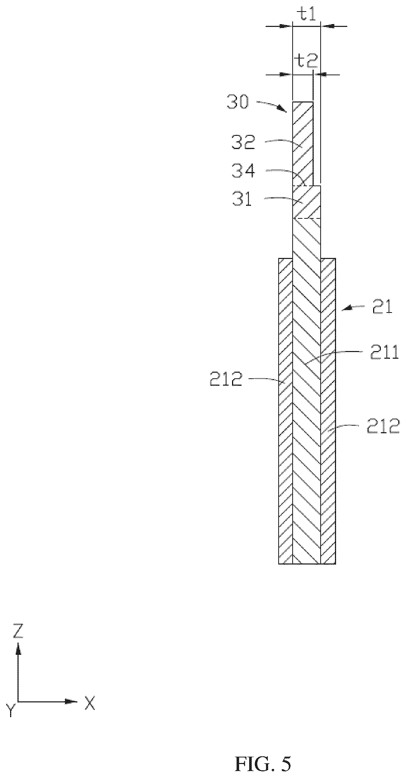

As shown in FIG. 4 and FIG. 5, the first electrode plate 21 includes a first current collector 211 and a first active material layer 212 disposed on a surface of the first current collector 211. The first tab 30 is connected to the first current collector 211. Along a first direction Z, the first tab 30 protrudes beyond the first electrode plate 21, where the first direction Z is the width direction of the first electrode plate 21.

In an embodiment of this application, the first tab 30 and the first current collector 211 are formed in one piece. The first tab 30 is formed by cutting the first current collector 211. In an embodiment, the first current collector 211 is made of a material including aluminum.

It is hereby noted that a region coated with the first active material layer 212 on the first electrode plate 21 is also referred to as a coating region. A region that exposes the first current collector 211 on the first electrode plate 21 and a region that exposes the first current collector 211 on the first tab 30 are also referred to as blank foil regions.

To improve the compaction density of the first active material layer 212 so as to improve the energy density of the battery 100, the first electrode plate 21 needs to be cold pressed before the first tab 30 is formed from the first current collector 211 on the first electrode plate 21. During the cold pressing, some particles of the first active material layer 212 are pressed and embedded into the first current collector 211. Consequently, the structural strength and ductility of the first current collector 211 are decreased. When the blank foil region is stretched after cold pressing, the first current collector 211 is very prone to break, thereby impairing the yield rate of the processed electrode plates. In the technical solutions of this application, before the first electrode plate 21 is cold pressed, at least a part of blank foil region is calendered so that the first electrode plate is pre-elongated and stretched. In addition, after the first current collector 211 is cut to form the first tab 30, the pre-calendered and elongated blank foil region forms at least a part of the first tab 30.

The first tab 30 includes a first region 31 and a second region 32. The first region 31 is located between the second region 32 and the first active material layer 212. The first region 31 connects the second region 32 and the first electrode plate 21.

The first tab 30 includes a first boundary line 34. The first boundary line 34 is located at the junction between the first region 31 and the second region 32. Along the first direction Z, the first region 31 and the second region 32 are located on two sides of the first boundary line 34 respectively.

In this application, the first boundary line 34 is formed by pre-calendering and elongating the first electrode plate 21. The pre-calendered and elongated blank foil region constitutes a second region 32. In an embodiment, the first boundary line 34 is an indentation.

Along a second direction X perpendicular to the first direction Z, the thickness of the first region 31 is t₁, and the thickness of the second region 32 is t₂, satisfying: 0.5% ≤ (t₁ - t₂)/t₁ ≤ 5%, where the second direction X is a thickness direction of the first electrode plate 21.

In the battery 100 of this application, before cold pressing the first electrode plate 21, a part of the blank foil region is calender so that the first electrode plate is pre-elongated and stretched, and the thickness t₁ of the first region 31 that is not pre-calendered and elongated and the thickness t₂ of the second region 32 that is pre-calendered and elongated satisfy 0.5% ≤ (t₁ - t₂)/t₁ ≤ 5%. The difference between the thickness of the first region 31 and the thickness of the second region 32 needs to be prevented from being unduly large. If the difference is unduly large, the electrode plate is prone to break due to stress concentration at the junction. If the difference is unduly small, for example, less than 0.5%, a desired elongation effect of the second region 32 fails to be achieved, and the first tab 30 is prone to warps and folds. After the first electrode plate 21 of this application is cold pressed, the thickness t₁ of the first region 31 and the thickness t₂ of the second region 32 satisfy 0.5% ≤ (t₁ - t₂)/t₁ ≤ 5%. The first electrode plate 21 provided in this application can reduce the phenomena of electrode plate breakage in contrast to other first electrode plates 21 with the blank foil region stretched and elongated after cold pressing. Moreover, the first electrode plate 21 of this application can employ a thinner first current collector 211 and a first active material layer 212 with a higher compaction density without increasing the frequency of breakage of electrode plates, thereby improving the energy density of the battery 100.

In an embodiment, the thicknesses satisfy 0.5% ≤ (t₁ - t₂)/t₁ ≤ 3%, thereby further reducing the phenomena of breakage of the first electrode plate 21. In this way, a thinner current collector and/or a higher compaction density can be employed, and the energy density of the battery can be improved.

In an embodiment, the thicknesses satisfy 0.5% ≤ (t₁ - t₂)/t₁ ≤ 1.5%, thereby further reducing the phenomena of breakage of the first electrode plate 21. In an embodiment, the value of (t₁ - t₂)/t₁ is any one of 0.5%, 1%, 1.5%, 2%, 2.5%, 3%, 3.5%, 4%, 4.5%, or 5%.

In an embodiment, along a second direction X, an area of a projection of the first tab 30 is S₁, and an area of a projection of the second region 32 is S₂, satisfying: 60% ≤ S₂/S₁ ≤ 95%. The first region 31 is of low ductility, and the second region 32 is of relatively high ductility after being pre-calendered. If the area of the second region 32 is unduly small, the first electrode plate 21 is prone to warps and folds during winding. Therefore, along the thickness direction of the tab 30, an area S₁ of the projection of the first tab 30 and the area S₂ of the projection of the second region 32 satisfy 60% ≤ S₂/S₁ ≤ 95%. This setting reduces the warps or folds of the first tab 30, improves the flatness and energy density of batteries.

In some embodiments, the area of the projection satisfies 80% ≤ S₂/S₁ ≤ 95%, thereby further reducing the warps and folds of the first tab 30 and improving the flatness and energy density of batteries.

In an embodiment, the value of S₂/S₁ is any one of 60%, 65%, 70%, 75%, 80%, 85%, 90%, 95%, or 100%.

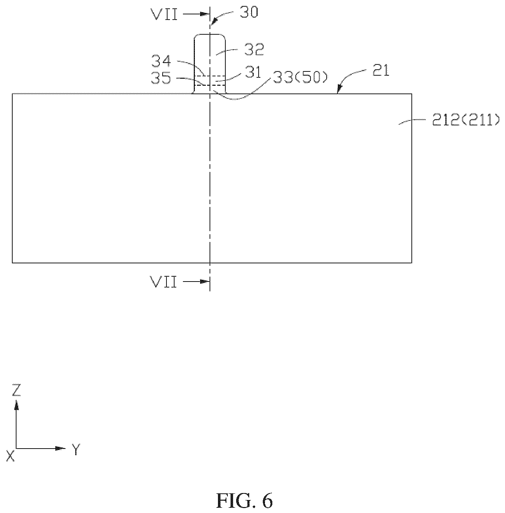

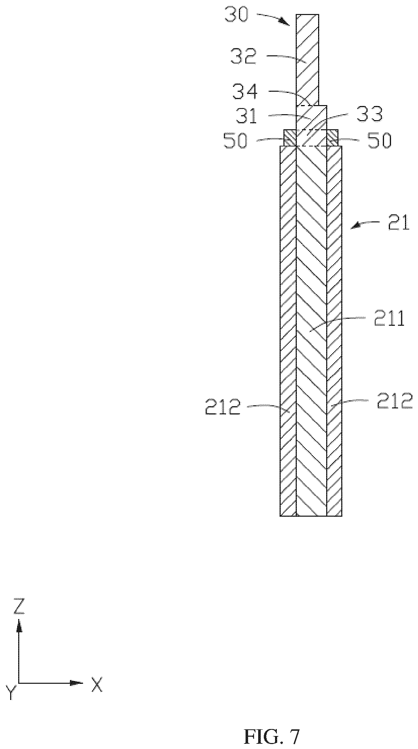

As shown in FIG. 6 and FIG. 7, in some embodiments, the first tab 30 further includes a third region 33. The third region 33 is located between the first region 31 and the first active material layer 212. The third region 33 connects the first region 31 and the first active material layer 212.

In an embodiment, the first tab 30 further includes a second boundary line 35. The second boundary line 35 is located at the junction between the first region 31 and the third region 33. Along the first direction Z, the first region 31 and the third region 33 are located on two sides of the second boundary line 35 respectively.

The battery 100 further includes a first insulation layer 50. The first insulation layer 50 is disposed on the surface of the third region 33. The first insulation layer 50 is connected to the first active material layer 212. When the first electrode plate 21, the second electrode plate 22, and the separator 23 are wound or stacked to form an electrode assembly 20, the first insulation layer 50 can play a role of insulation protection, reduce the risk of a short circuit between the first tab 30 and the second tab 40, and improve the safety performance of the battery 100. In contrast to the battery 100 without the first insulation layer 50, the burrs at the edge of the first tab 30 are very prone to pierce the separator 23 so as to be electrically connected to the second tab 40, resulting in a short circuit of the battery 100. In an embodiment of this application, the first insulation layer 50 is disposed, and the first insulation layer 50 can wrap the burrs at the edge of the first tab 30, thereby reducing the risk of a short circuit of the battery 100.

In an embodiment, the first active material layer 212 fully covers the first current collector 211 of the first electrode plate 21. The first insulation layer 50 is connected to the first active material layer 212, thereby reducing the exposed area of the blank foil region, further reducing the risk of the short circuit between the first tab 30 and the second tab 40, and improving the safety performance of the battery 100.

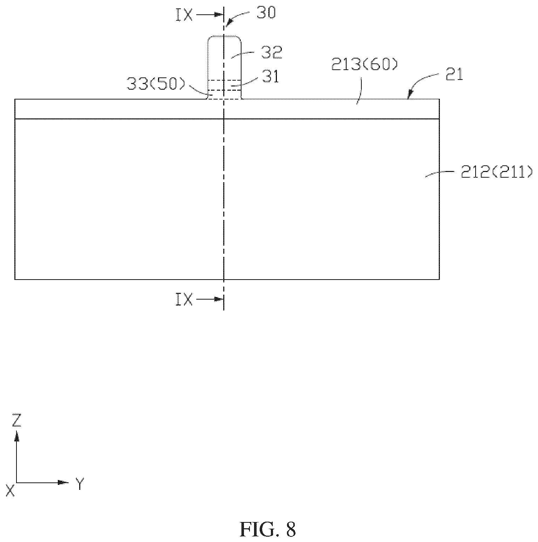

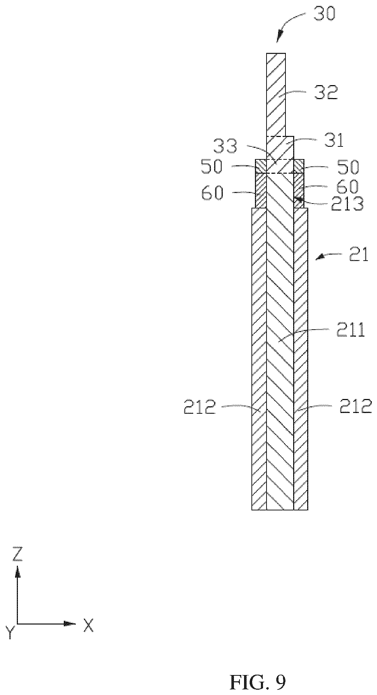

As shown in FIG. 8 and FIG. 9, in an embodiment, a fourth region 213 is disposed on the first electrode plate 21. The fourth region 213 exposes the first current collector 211. The fourth region 213 is located between the first active material layer 212 and the first tab 30, and connects the first active material layer 212 and the first tab 30. In an embodiment, the fourth region 213 is located between the first active material layer 212 and the third region 33, and connects the first active material layer 212 and the third region 33.

The battery 100 further includes a second insulation layer 60. The second insulation layer 60 is disposed on the surface of the fourth region 213. The second insulation layer 60 is connected to the first insulation layer 50 and the first active material layer 212. When the first electrode plate 21, the second electrode plate 22, and the separator 23 are wound or stacked to form an electrode assembly 20, the second insulation layer 60 can play a role of insulation, reduce the risk of a short circuit between the first electrode plate 21 and the second electrode plate 22, and improve the safety performance of the battery 100. In contrast to the battery 100 without the second insulation layer 60, the burrs at the edge of the first electrode plate 21 are very prone to pierce the separator 23 so as to be electrically connected to the second electrode plate 22, resulting in a short circuit of the battery 100. In an embodiment of this application, the second insulation layer 60 is disposed, and the second insulation layer 60 can wrap the burrs at the edge of the first electrode plate 21, thereby reducing the risk of a short circuit of the battery 100.

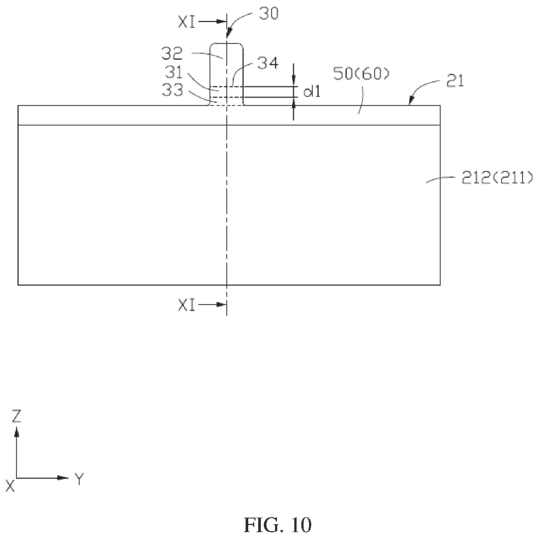

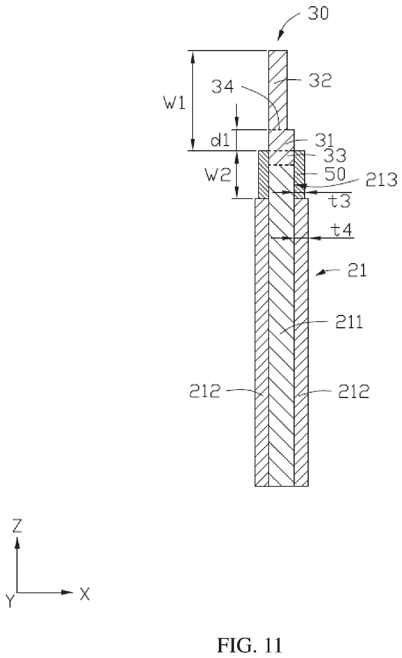

As shown in FIG. 10 and FIG. 11, in an embodiment, the first insulation layer 50 and the second insulation layer 60 are made of the same material. The first insulation layer 50 and the second insulation layer 60 are molded in a single pass, thereby simplifying the preparation process of the battery 100, shortening the preparation cycle of the battery 100, and saving cost.

For ease of understanding and description, an example is further described below in which the first insulation layer 50 is disposed on the surfaces of both the third region 33 and the fourth region 213.

In an embodiment, along the first direction Z, a first boundary line 34 exists at a junction between the first region 31 and the second region 32. A minimum distance between the first boundary line 34 and the first insulation layer 50 is d₁, satisfying: 0.1 mm ≤ d₁ ≤ 1 mm. In this way, the first region 31 possesses a specified width along the first direction Z. The first region 31 may be used as a transition region between the pre-calendered second region 32 and the first tab 30, so as to improve structural strength of a junction region between the first tab 30 and the first electrode plate 21, reduce the risk of bending or fracture of the first tab 30 along the junction between the first tab and the first electrode plate 21, and improve the shock resistance performance of the battery 100.

In an embodiment, the minimum distance satisfies 0.4 mm ≤ d₁ ≤ 1 mm, thereby further ensuring sufficient structural strength of the junction region between the first tab 30 and the first electrode plate 21, reducing the risk of bending or fracture of the first tab 30 along the junction between the first tab and the first electrode plate 21, and improving the shock resistance performance of the battery 100.

In an embodiment, the value of d₁ is any one of 0.1 mm, 0.2 mm, 0.3 mm, 0.4 mm, 0.5 mm, 0.6 mm, 0.7 mm, 0.8 mm, 0.9 mm, or 1 mm.

In an embodiment, along the second direction X, the thickness of the first insulation layer 50 is t₃, and the thickness of the first active material layer 212 is t₄, satisfying: t₃ < t₄. In an embodiment, 50 µm ≤ t₄ ≤ 150 µm.

In some other embodiments, t₃ = t₄ (not shown in the drawing). In some other embodiments, t₃ > t₄ (not shown in the drawing).

In an embodiment, along the first direction Z, the length of the first insulation layer 50 is W₂, satisfying: W₂ ≥ 1 mm. The length range of the first insulation layer 50 along the first direction Z ensures a good protective effect of the first insulation layer 50 and reduces the risk of a short circuit of the battery 100. In an embodiment, W₂ ≥ 2 mm.

In an embodiment, the length of the first tab 30 along the first direction Z is W₁, satisfying W₂/W₁ ≤ 0.5. The specified dimensional relationship between the first tab 30 and the first insulation layer 50 along the first direction Z improves the ability of the first tab 30 to conduct current and the ability to dissipate heat, and increases the charging and discharging speed of the battery 100 and the efficiency of heat dissipation.

In an embodiment, the first insulation layer 50 includes an inorganic compound. In an embodiment, the inorganic compound is made of a material including but not limited to at least one of aluminum oxide, magnesium oxide, or titanium oxide.

In an embodiment, the weight of the first active material layer 212 is G₁, satisfying: 100 g/m² ≤ G₁ ≤ 300 g/m², where the weight G₁ of the first active material layer 212 is the weight of the first active material layer 212 applied per square meter of the surface on a single side of the first current collector 211.

In an embodiment, the compaction density of the first active material layer 212 is D₁, satisfying: 2.2 g/cm³ ≤ D₁ ≤ 4.2 g/cm³, where the compaction density D₁ of the first active material layer 212 is the weight of the first active material layer 212 per unit volume of the cold-pressed first electrode plate 21.

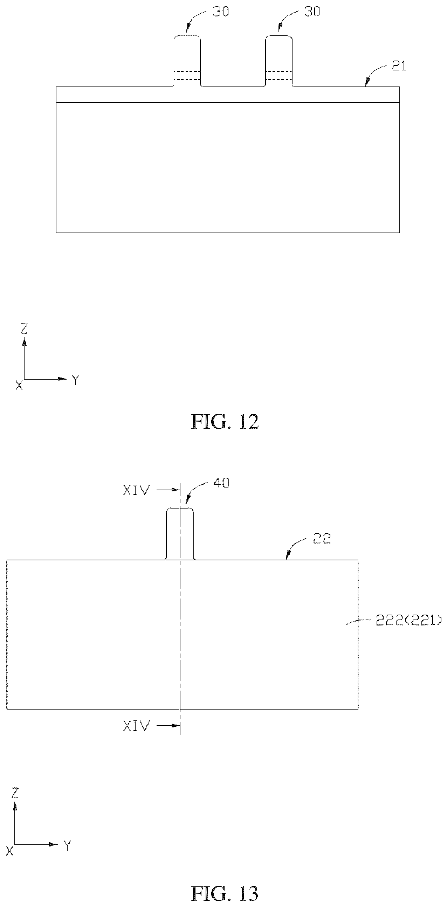

As shown in FIG. 12, in an embodiment, there are a plurality of first tabs 30. The plurality of first tab 30 are spaced apart along a third direction Y perpendicular to the first direction Z and the second direction X. The plurality of first tabs 30 not only improve the charging and discharging speed of the battery 100, but also improve the heat dissipation capability of the battery 100. Optionally, there are two first tabs 30.

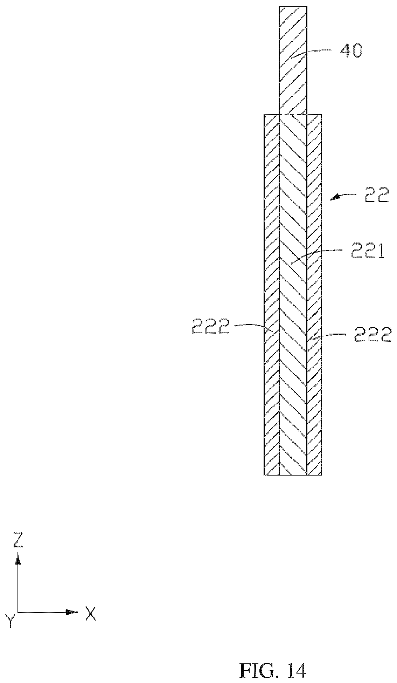

As shown in FIG. 13 and FIG. 14, the second electrode plate 22 includes a second current collector 221 and a second active material layer 222 disposed on a surface of the second current collector 221. The second tab 40 is connected to the second current collector 221. Along the first direction Z, the second tab 40 protrudes beyond the second electrode plate 22.

In an embodiment, the second tab 40 and the second current collector 221 are formed in one piece. The second tab 40 is formed by cutting the second current collector 221. In an embodiment, the second current collector 221 is made of a material including any one of copper, nickel, or nickel alloy.

Compared to the first tab 30 and the first current collector 211, the second tab 40 and the second current collector 221 are made of materials of higher structural strength and higher resistance to deformation. In an embodiment, after the second electrode plate 22 is cold pressed, the blank foil region does not need to be stretched or elongated. In an embodiment, before the second electrode plate 22 is cold pressed, the blank foil region does not need to be pre-calendered.

In an embodiment, before the second electrode plate 22 is cold pressed, the blank foil region on the second electrode plate 22 is pre-calendered to reduce the phenomena of breakage of the second electrode plate 22 after cold pressing. In an embodiment, the pre-calendering operation for the blank foil region on the second electrode plate 22 is the same as the pre-calendering operation for the blank foil region on the first electrode plate 21 in any one of the embodiments described above, and details of the operation is omitted here.

In an embodiment, the first electrode plate 21 is prepared in the following process:
1) Mixing 96 wt% lithium cobalt oxide, 1.5 wt% conductive carbon, and a 2.5 wt% binder evenly in an appropriate amount of solvent (such as deionized water or N-methyl-pyrrolidone) to make a slurry in which the solid content is approximately 75%;
2) Applying the slurry in step 1) to a part of the surface of the first current collector 211, and leaving a part of the surface of the first current collector 211 to be blank and bare;
3) Drying the slurry on the surface of the first current collector 211 in step 2) to obtain the first electrode plate 21; and
4) Pre-calendering the blank foil region on the surface of the first electrode plate 21 obtained in step 3), and then rolling the coated region of the first electrode plate 21 to obtain a first electrode plate 21.

In an embodiment, the first tab 30 is prepared in the following process: cutting the blank foil region of the first electrode plate 21 to obtain the first tab 30 that protrudes beyond the first electrode plate 21.

It is hereby noted that the preparation process and techniques of the first electrode plate 21 are merely an example. The ingredients of each material and the percentages of various ingredients in the material in the first electrode plate 21 are not particularly limited in this application.

To verify how the pre-calendering for the first electrode plate 21 in this application before cold pressing reduces the breakage of the electrode plate and how a thinner current collector and/or a higher compaction density of the electrode plate affects the energy density of the battery 100, a plurality of contrast tests are conducted. The detailed test information are as follows:

A plurality of groups of first electrode plates 21 are selected for being tested in comparative embodiments versus embodiments. In the test of each comparative embodiment, the number of samples of the first electrode plate 21 is 10. In the test of each embodiment, the number of samples of the first electrode plate 21 is 10.

An average probability of breakage of each first electrode plate 21 after the blank foil region is stretched and elongated and the electrode plate is cold pressed, and an average energy density of the batteries 100 containing each first electrode plate 21 in the plurality of comparative embodiments, are obtained.

Additional details of the test in the comparative embodiments and the test in the embodiments are as follows:

### Comparative Embodiment 1

The first electrode plate 21 is not pre-calendered. The blank foil region is stretched and elongated after the first electrode plate 21 is cold pressed. The coating concentration of the first active material layer 212 is 150 g/m². The compaction density of the first active material layer 212 is 3.85 g/cm³.

### Comparative Embodiment 2

The first electrode plate 21 is pre-calendered, and then the first electrode plate 21 is cold pressed. After the cold pressing, the blank foil region is not stretched or elongated. The coating concentration of the first active material layer 212 is 150 g/m², and the compaction density of the first active material layer 212 is 3.85 g/cm³. The relationship between the thickness t₁ of the first region 31 and the thickness t₂ of the second region 32 is: (t₁ - t₂)/t₁ = 10%. The minimum distance d₁ between the first boundary line 34 and the first insulation layer 50 is 0.5 mm. The ratio of the area S₂ of the second region 32 (pre-calendered region) to the area S₁ of the first tab 30 is 90%.

### Comparative Embodiment 3

The only difference from Comparative Embodiment 2 is: The relationship between the thickness t₁ of the first region 31 and the thickness t₂ of the second region 32 is: (t₁ - t₂)/t₁ = 7%.

### Embodiment 1

The first electrode plate 21 is pre-calendered, and then the first electrode plate 21 is cold pressed. After the cold pressing, the blank foil region is not stretched or elongated. The coating concentration of the first active material layer 212 is 150 g/m², and the compaction density of the first active material layer 212 is 3.85 g/cm³. The relationship between the thickness t₁ of the first region 31 and the thickness t₂ of the second region 32 is: (t₁ - t₂)/t₁ = 5%. The minimum distance d₁ between the first boundary line 34 and the first insulation layer 50 is 0.5 mm. The ratio of the area S₂ of the second region 32 (pre-calendered region) to the area S₁ of the first tab 30 is 90%.

The method for testing the thicknesses of the first region 31 and the second region 32 is: Selecting 3 positions in the first region 31 randomly, and measuring the thickness at each position by using a vernier caliper, and then calculating an arithmetic average of the measured thicknesses, that is, the thickness of the first region 31. The thickness of the second region 32 is tested in the same way.

### Embodiment 2

The only difference from Embodiment 1 is: The relationship between the thickness t₁ of the first region 31 and the thickness t₂ of the second region 32 is: (t₁ - t₂)/t₁ = 3.5%.

### Embodiment 3

The only difference from Embodiment 1 is: The relationship between the thickness t₁ of the first region 31 and the thickness t₂ of the second region 32 is: (t₁ - t₂)/t₁ = 3.0%.

### Embodiment 4

The only difference from Embodiment 1 is: The relationship between the thickness t₁ of the first region 31 and the thickness t₂ of the second region 32 is: (t₁ - t₂)/t₁ = 2.5%.

### Embodiment 5

The only difference from Embodiment 1 is: The relationship between the thickness t₁ of the first region 31 and the thickness t₂ of the second region 32 is: (t₁ - t₂)/t₁ = 1.5%.

### Embodiment 6

The only difference from Embodiment 1 is: The relationship between the thickness t₁ of the first region 31 and the thickness t₂ of the second region 32 is: (t₁ - t₂)/t₁ = 0.5%.

### Embodiment 7

The only difference from Embodiment 6 is: The compaction density of the first active material layer 212 is 3.90 g/cm³.

### Embodiment 8

The only difference from Embodiment 6 is: The compaction density of the first active material layer 212 is 4.00 g/cm³.

### Embodiment 9

The only difference from Embodiment 6 is: The compaction density of the first active material layer 212 is 4.10 g/cm³.

### Embodiment 10

The only difference from Embodiment 6 is: The compaction density of the first active material layer 212 is 4.20 g/cm³.

### Embodiment 11

The only difference from Embodiment 6 is: The minimum distance d₁ between the first boundary line 34 and the first insulation layer 50 is 0.1 mm, and the ratio of the area S₂ of the second region 32 (pre-calendered region) to the area S₁ of the first tab 30 is 95%.

### Embodiment 12

The only difference from Embodiment 6 is: The minimum distance d₁ between the first boundary line 34 and the first insulation layer 50 is 0.3 mm, and the ratio of the area S₂ of the second region 32 (pre-calendered region) to the area S₁ of the first tab 30 is 93%.

### Embodiment 13

The only difference from Embodiment 6 is: The minimum distance d₁ between the first boundary line 34 and the first insulation layer 50 is 0.7 mm, and the ratio of the area S₂ of the second region 32 (pre-calendered region) to the area S₁ of the first tab 30 is 85%.

### Embodiment 14

The only difference from Embodiment 6 is: The minimum distance d₁ between the first boundary line 34 and the first insulation layer 50 is 1.0 mm, and the ratio of the area S₂ of the second region 32 (pre-calendered region) to the area S₁ of the first tab 30 is 80%.

### Embodiment 15

The only difference from Embodiment 6 is: The minimum distance d₁ between the first boundary line 34 and the first insulation layer 50 is 1.2 mm, and the ratio of the area S₂ of the second region 32 (pre-calendered region) to the area S₁ of the first tab 30 is 75%.

### Embodiment 16

The only difference from Embodiment 6 is: The minimum distance d₁ between the first boundary line 34 and the first insulation layer 50 is 1.5 mm, and the ratio of the area S₂ of the second region 32 (pre-calendered region) to the area S₁ of the first tab 30 is 60%.

### Embodiment 17

The only difference from Embodiment 6 is: The minimum distance d₁ between the first boundary line 34 and the first insulation layer 50 is 1.6 mm, and the ratio of the area S₂ of the second region 32 (pre-calendered region) to the area S₁ of the first tab 30 is 55%.

For the plurality of comparative embodiments and embodiments, the number of breaks per unit length of each first electrode plate 21 is obtained, and the data of all the first electrode plates 21 is recorded, so as to obtain the energy density of the battery 100 containing each first electrode plate 21 and the number of folds of the first tab 30 in some embodiments. The statistic data is made into the following table:

**Table 1**

| | Compaction density of active material layer (g/cm³) | (t₁-t₂)_{/}t₁ (%) | d₁ (mm) | S₂/S₁ (%) | Number of breaks of cold pressed electrode plate (breaks/10000 m) | Energy density of battery (Wh/L) |
|---|---|---|---|---|---|---|
| Comparative Embodiment 1 | 3.85 | / | / | / | 33.0 | 716 |
| Comparative Embodiment 2 | 3.85 | 10 | 0.5 | 90 | 22.3 | 716 |
| Comparative Embodiment 3 | 3.85 | 7 | 0.5 | 90 | 18.5 | 716 |
| Embodiment 1 | 3.85 | 5.0 | 0.5 | 90 | 5.0 | 716 |
| Embodiment 2 | 3.85 | 3.5 | 0.5 | 90 | 4.0 | 716 |
| Embodiment 3 | 3.85 | 3.0 | 0.5 | 90 | 3.5 | 716 |
| Embodiment 4 | 3.85 | 2.5 | 0.5 | 90 | 3.1 | 716 |
| Embodiment 5 | 3.85 | 1.5 | 0.5 | 90 | 2.8 | 716 |
| Embodiment 6 | 3.85 | 0.5 | 0.5 | 90 | 2.0 | 716 |

**Table 2**

| | Compaction density of active material layer (g/cm³) | (t₁-t₂)_{/}t₁ (%) | d₁ (mm) | S₂/S₁ (%) | Number of breaks of cold pressed electrode plate (breaks/10000 m) | Energy density of battery (Wh/L) |
|---|---|---|---|---|---|---|
| Comparative Embodiment 1 | 3.85 | / | / | / | 33.0 | 716 |
| Embodiment 6 | 3.85 | 0.5 | 0.5 | 90 | 2.0 | 716 |
| Embodiment 7 | 3.90 | 0.5 | 0.5 | 90 | 2.1 | 720 |
| Embodiment 8 | 4.00 | 0.5 | 0.5 | 90 | 2.2 | 725 |
| Embodiment 9 | 4.10 | 0.5 | 0.5 | 90 | 3.7 | 731 |
| Embodiment 10 | 4.20 | 0.5 | 0.5 | 90 | 4.8 | 736 |

**Table 3**

| | Compaction density of active material layer (g/cm³) | (t₁-t₂)_{/}t₁ (%) | d₁ (mm) | S₂/S₁ (%) | Number of breaks of cold pressed electrode plate (breaks/10000 m) | Frequency of folding of tab (%) |
|---|---|---|---|---|---|---|
| Embodiment 6 | 3.85 | 0.5 | 0.5 | 90 | 2.0 | 0.000 |
| Embodiment 11 | 3.85 | 0.5 | 0.1 | 95 | 1.7 | 0.000 |
| Embodiment 12 | 3.85 | 0.5 | 0.3 | 93 | 1.5 | 0.000 |
| Embodiment 13 | 3.85 | 0.5 | 0.7 | 85 | 2.0 | 0.000 |
| Embodiment 14 | 3.85 | 0.5 | 1.0 | 80 | 1.8 | 0.000 |
| Embodiment 15 | 3.85 | 0.5 | 1.2 | 75 | 2.1 | 0.001 |
| Embodiment 16 | 3.85 | 0.5 | 1.5 | 60 | 2.1 | 0.002 |
| Embodiment 17 | 3.85 | 0.5 | 1.6 | 55 | 2.1 | 0.022 |

As can be seen from Table 1, compared to the first electrode plate 21 that is not pre-calendered before cold pressing, the blank foil region of the first electrode plate 21 of this application is pre-calendered before cold pressing, thereby reducing the frequency of breakage of the first electrode plate 21.

As can be seen from Table 2, the first electrode plate 21 disclosed in an embodiment of this application possesses a greater compaction strength, improves the compaction density of the first active material layer 212, and improves the energy density of the battery 100.

As can be seen from Table 3, the first electrode plate 21 disclosed in an embodiment of this application reduces the frequency of folding of the first tab 30, and improves the yield rate of the battery 100.

In summary, in the battery 100 of this application, the tab is set to include a first region 31 and a second region 32 along the width direction of the electrode plate. The first region 31 is connected to the second region 32 and the electrode plate. The second region 32 is calendered before cold pressing, so as to pre-elongate the second region. In addition, the thickness t₁ of the first region 31 and the thickness t₂ of the second region 32 satisfy: 0.5% ≤ (t₁ - t₂)/t₁ ≤ 5%, thereby reducing the phenomenon of breakage of the cold pressed electrode plate. This design enables a thinner current collector and/or a higher compaction density, and increases the energy density of the battery 100.

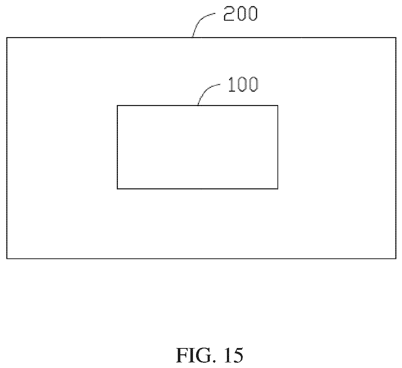

As shown in FIG. 15, an embodiment of this application further provides an electrical device 200. The electrical device includes the battery 100 according to any one of the embodiments described above. The battery 100 can provide electrical energy for the electrical device 200.

In an embodiment, the electrical device 200 includes electronic devices such as an unmanned aerial vehicle, a mobile phone, a watch, a tablet computer, or a laptop computer.

In the electrical device 200, the blank foil region is pre-calendered before the first electrode plate 21 of the battery 100 is cold pressed, thereby alleviating the problem of breakage of the first electrode plate 21. This design enables a thinner current collector and/or a higher compaction density, thereby improving the energy density of the battery 100 and alleviating the impact caused by a low energy density of the battery 100 onto the electrical device 200.

In addition, a person skilled in the art may make other variations to this application without departing from the essence of this application. The variations made based on the essence of this application still fall within the protection scope of this application.

## Claims

1. A battery, the battery comprising:
an electrode plate, the electrode plate comprises a current collector and an active material layer disposed on the current collector;
a tab, connected to the current collector, and the tab protrudes beyond the electrode plate along a width direction of the electrode plate; wherein
along the width direction of the electrode plate, the tab comprises a first region and a second region, the first region is located between the second region and the active material layer, a thickness of the first region is t₁, and a thickness of the second region is t₂, satisfying: 0.5% ≤ (t₁ - t₂)/t₁ ≤ 5%.

2. The battery according to claim 1, wherein 0.5% ≤ (t₁ - t₂)/t₁ ≤ 3%.

3. The battery according to claim 1, wherein 0.5% ≤ (t₁ - t₂)/t₁ ≤ 1.5%.

4. The battery according to claim 1, wherein, along a thickness direction of the tab, an area of a projection of the tab is S₁ and an area of a projection of the second region is S₂, satisfying: 60% ≤ S₂/S₁ ≤ 95%.

5. The battery according to claim 4, wherein 80% ≤ S₂/S₁ ≤ 95%.

6. The battery according to claim 1, wherein along the width direction of the electrode plate, the tab further comprises a third region, the third region is located between the first region and the active material layer and connects the first region and the active material layer, a first insulation layer is disposed on the third region, and the first insulation layer is located between the first region and the active material layer.

7. The battery according to claim 6, wherein a first boundary line exists at a junction between the first region and the second region, and a minimum distance between the first boundary line and the first insulation layer is d₁, satisfying: 0.1 mm ≤ d₁ ≤ 1 mm.

8. The battery according to claim 6, wherein the first insulation layer satisfies at least one of the following conditions a, b, or c:
a. a thickness of the first insulation layer is less than a thickness of the active material layer;
b. along the width direction of the electrode plate, a length of the tab is W₁, and a length of the first insulation layer is W₂, satisfying: W₂/W₁ ≤ 0.5, and W₂ ≥ 1 mm; and
c. the first insulation layer comprises an inorganic compound, and the inorganic compound is made of a material that comprises at least one of aluminum oxide, magnesium oxide, or titanium oxide.

9. The battery according to claim 1, wherein there are a plurality of tabs.

10. The battery according to claim 1, wherein the tab is a positive tab.

11. An electrical device, wherein the electrical device comprises the battery according to any one of claims 1 to 10.
